(19) Europäisches Patentamt
European Patent Office
Office européen des brevets

(11) **EP 4 302 989 A1**

(12) **EUROPEAN PATENT APPLICATION**
published in accordance with Art. 153(4) EPC

(43) Date of publication:
**10.01.2024 Bulletin 2024/02**

(21) Application number: **22763151.2**

(22) Date of filing: **28.02.2022**

(51) International Patent Classification (IPC):
**B32B 5/24** (2006.01)     **F28F 3/08** (2006.01)
**F28F 21/06** (2006.01)     **C08J 9/28** (2006.01)
**C08J 9/36** (2006.01)     **C08J 7/04** (2020.01)
**F24F 7/08** (2006.01)

(52) Cooperative Patent Classification (CPC):
**B32B 5/24; C08J 7/04; C08J 9/28; C08J 9/36;
F24F 7/08; F28F 3/08; F28F 21/06**

(86) International application number:
**PCT/JP2022/008116**

(87) International publication number:
**WO 2022/186095 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.03.2021 JP 2021032412**

(71) Applicant: **Mitsubishi Paper Mills Limited
Tokyo 130-0026 (JP)**

(72) Inventors:
• **YAMANE, Kengo
Tokyo 130-0026 (JP)**
• **TSUKUDA, Kazuya
Tokyo 130-0026 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **MOISTURE-PERMEABLE FILM FOR TOTAL HEAT EXCHANGE ELEMENTS, AND TOTAL HEAT EXCHANGE ELEMENTS**

(57)     [Problem]

A problem of the present invention is, in a moisture permeable film for a total heat exchange element, which is a partition plate for constituting a total heat exchange element for a total heat exchanger, to provide a moisture permeable film for a total heat exchange element which is excellent in adhesiveness to a polyolefin microporous film and has high moisture permeability, gas barrier property and moisture resistance.

[Solution]

The above problem was solved by a moisture permeable film for a total heat exchange element in which a moisture permeable resin layer is provided on at least one surface of a polyolefin microporous film having air resistance of 100sec or more and moisture permeability of 750g/m$^2$·24hr or more.

**Description**

TECHNICAL FIELD

The present invention relates to a total heat exchange element which is mounted in a total heat exchanger for exhausting foul indoor air together with supplying fresh outside air inside a room for maintaining a comfortable space in buildings, offices, stores, residences, and so on, and which performs exchange of humidity (latent heat) and exchange of temperature (sensible heat) simultaneously. In addition, the present invention relates to a moisture permeable film for a total heat exchange element, which is used as a partition plate of the total heat exchange element.

BACKGROUND ART

In indoor air conditioning, as a ventilation method excellent in cooling and heating efficiency, total heat exchange is well known. The total heat exchange is a method in which exchange of humidity (latent heat) is simultaneously performed together with exchange of temperature (sensible heat) between supplying air flow for supplying fresh outside air and exhausting air flow for exhausting foul indoor air.

The total heat exchange elements include a cross-flow type total heat exchange element and a counter-flow type total heat exchange element, and are produced by processing paper for total heat exchange or a moisture permeable film for a total heat exchange element, which is a partition plate. Both total heat exchange elements are produced using a dedicated machine, and both are constituted of a laminate in which air supplying layers which let supplying air flow pass through, and air exhausting layers which let exhausting air flow pass through are alternately laminated through a partition plate having moisture permeability. In each flow path, an interval plate for holding an interval of partition plates which are arranged at a predetermined interval, is formed. Generally, as the interval plate, a paper wave-shaped interval plate which is corrugated is used in the case of the cross-flow type total heat exchange element, and a resin frame produced by injection molding or the like is used in the case of the counter-flow type total heat exchange element. A direction in which the supplying air flow is guided by supplying air flow path and a direction in which the exhausting air flow is guided by exhausting air flow path are perpendicular to each other in the case of the cross-flow type total heat exchange element and are opposed to each other counter-flow type total heat exchange element.

Since porous materials are used in a partition plate used for a total heat exchange element so far, for example, it has air permeability of foul gas components such as carbon dioxide, hence, it has a disadvantage that when carrying out total heat exchange, supplying air flow and exhausting air flow mix inside the total heat exchange element and an efficiency of ventilation decreases. The mixing of the supplying air flow and the exhausting air flow is a fatal defect for a total heat exchanger. In the total heat exchanger in which the supplying air flow and the exhausting air flow is mixed, it might be an evaluation that simply agitating foul air indoors rather than exchanging indoor and outdoor air recovering energy. Thus, if indoor and outdoor air are mixed, the total heat exchanger cannot serve a purpose of ventilation and does not become functional at all.

In addition, with the spread of total heat exchangers, total heat exchangers have come to be installed in various places and environments. Although there is no problem when temperature difference and humidity difference between supplying air flow and exhausting air flow is small, for example, in an environment in a cold region where temperature of outside air is low and condensation is easily to occur, or in an environment in which temperature difference and humidity difference between supplying air flow and exhausting air flow is large in such as a bathroom with high indoor humidity, when performing total heat exchange, there is a case in which a partition plate is exposed to a condition of high humidity. If such a state continues, there is a case in which the partition plate cannot hold a large amount of moisture, and water drips from the partition plate, that is, "water dripping" occurs. When water dripping occurs, depending on a type of a hygroscopic agent, there is a risk in which rust is generated in an outer frame of a metal used as a reinforcement. Further, when water dripping continues, there is a risk in which a total heat exchange element loses its shape and a total heat exchanger does not become functional at all.

For this reason, when fabricating a total heat exchange element, an excellent partition plate that hardly causes mixture of supplying air flow and exhausting air flow (that is, excellent in gas barrier property), hardly causes water dripping, is excellent in moisture resistance, and has high moisture permeability, is required. In response to such a request, a substrate for a composite film which is composed of a polyolefin microporous film and is used for supporting a hydrophilic resin compound in pores of the microporous film is disclosed (for example, Patent Document 1). However, in the technique of Patent Document 1, when the substrate used as it is, there is no barrier property and sufficient exchange efficiency cannot be obtained, and when the hydrophilic resin compound is impregnated, although a certain degree of barrier property can be obtained, moisture permeability becomes low and sufficient exchange efficiency cannot be obtained.

Further, a film for a total heat exchange element equipped with a film substrate of a synthetic resin in which many through holes are formed by pulling on both sides, and a hydrophilic polymer compound filled in a through hole part of the film substrate of a synthetic resin are disclosed (for example, Patent Document 2). However, in the technique of Patent Document 2, even if barrier property can be obtained, high moisture permeability cannot be obtained and sufficient exchange efficiency cannot be obtained.

Besides, a moisture permeable waterproof film which is composed of a polyolefin microporous film containing polyethylene and is defined by a water vapor permeation amount and a water resistance pressure is disclosed (for example, Patent Document 3). However, in the technique of Patent Document 3, there was room for improvement in compatibility of barrier property and moisture permeability.

In addition, a total heat exchange element in which partition plate contains the first layer and the third layer having waterproofness, gas permeability and non-water solubility, and the second layer sandwiched between these layers contains an adhesive having gas permeability and water vapor permeability, is disclosed (for example, Patent Document 4). However, in the technique of Patent Document 4, sufficient moisture permeability and moisture resistance cannot be obtained, and it is economically disadvantageous in actual production.

PRIOR ART DOCUMENTS

PATENT DOCUMENTS

[0010]

　　　Patent Document 1: JP 2018-90821 A
　　　Patent Document 2: JP 2014-66474 A
　　　Patent Document 3: JP 2014-61505 A
　　　Patent Document 4: WO 2012/056506

SUMMARY OF THE INVENTION

PROBLEMS TO BE SOLVED BY THE INVENTION

A problem of the present invention is, in a moisture permeable film for a total heat exchange element, which is a partition plate for constituting a total heat exchange element for a total heat exchanger, to provide a moisture permeable film for a total heat exchange element which is excellent in adhesiveness to a polyolefin microporous film and has high moisture permeability, gas barrier property and moisture resistance.

MEANS FOR SOLVING THE PROBLEMS

The problem concerning the present invention can be solved by the following means.
[0013]

　　　(1) A moisture permeable film for a total heat exchange element, containing a polyolefin microporous film having air resistance of 100sec or more and moisture permeability of $750g/m^2 \cdot 24hr$ or more, and a moisture permeable resin layer provided on at least one surface of the polyolefin microporous film.
　　　(2) The moisture permeable film for a total heat exchange element according to the above (1), wherein the moisture permeable resin layer contains a cellulose acetate resin having degree of acetylation of 60% or less, and degree of polymerization of 165 or more and 185 or less.
　　　(3) The moisture permeable film for a total heat exchange element according to the above (1), wherein the moisture permeable resin layer contains a urethane resin.
　　　(4) A total heat exchange element containing the moisture permeable film for a total heat exchange element according to any of the above (1) to (3).

EFFECTS OF THE INVENTION

A moisture permeable film for a total heat exchange element of the present invention is a moisture permeable film for a total heat exchange element in which a moisture permeable resin layer is provided on at least one surface of a polyolefin microporous film having air resistance of 100sec or more and moisture permeability of $750g/m^2 \cdot 24hr$ or more. According to the present invention, a moisture permeable film for a total heat exchange element which is excellent in adhesiveness to a polyolefin microporous film and has high moisture permeability, gas barrier property and moisture resistance can be provided.

EMBODIMENTS TO CARRY OUT THE INVENTION

In the following, a moisture permeable film for a total heat exchange element and a total heat exchange element of the present invention, are explained in detail.

In the present invention, a polyolefin microporous film is a microporous film comprised of polyolefin. Here, a microporous film means a film which has a large number of pores inside, and has a structure in which these pores are connected, allowing passage of gas or liquid from one surface to the other surface. As the polyolefin, for example, a homopolymer or a copolymer of polyethylene, polypropylene, polybutylene, polymethylpentene, and the like, and a mixture of 1 or more of these, are mentioned. Among them, polyethylene or polypropylene is particularly preferred. It is preferable that the polyolefin is contained in an amount of 90mass% or more in the polyolefin microporous film. The polyolefin microporous film may contain an additive such as an organic filler, an inorganic filler, or a surfactant as a component other than polyolefin within a range not affecting the effect of the present invention.

In the present invention, thickness of the polyolefin microporous film is not particularly limited. The thickness is preferably 5um or more and 30um or less, and more preferably 10pm or more and 20um or less. When the thickness is thinner than 5um, there is a case in which mechanical strength is not obtained and a problem occurs in the processing in an actual machine. When the thickness is thicker than 30um, there is a case in which moisture permeability decreases.

In the present invention, porosity of the polyolefin microporous film is not particularly limited. The porosity is preferably 30% or more and 70% or less, and more preferably 40% or more and 60% or less. When the porosity is lower than 30%, there is a case in which sufficient moisture permeability is not obtained. When the porosity is higher than 70%, there is a case in which mechanical strength decreases.

In the present invention, average pore diameter of the polyolefin microporous film is not particularly limited. The average pore diameter is preferably 10nm or more and 500nm or less, and more preferably 50nm or more and 200nm or less. When the average pore diameter is smaller than 10nm, there is a case in which sufficient moisture permeability is not obtained. When the average pore diameter is larger than 500nm, there is a case in which mechanical strength decreases.

In the present invention, air resistance of the polyolefin microporous film is 100sec or more, and moisture permeability of the polyolefin microporous film is 750g/m$^2$·24hr or more.

Air resistance of the polyolefin microporous film is 100sec or more, more preferably 200sec or more, and even more preferably 300sec or more, as the value of air resistance of Oken method which is measured according to JIS P 8117:2009 (air resistance (Oken)). When the air resistance is smaller than 100sec, there is a case in which sufficient adhesiveness is not obtained. Besides, air resistance of the polyolefin microporous film is preferably 500sec or less, from a viewpoint of moisture permeability possessed by the polyolefin microporous film itself.

Moisture permeability of the polyolefin microporous film is 750g/m$^2$·24hr or more, more preferably 800g/m$^2$·24hr or more, and even more preferably 850g/m$^2$·24hr or more. When the moisture permeability is smaller than 750g/m$^2$·24hr, there is a case in which sufficient moisture permeability as a moisture permeable film is not obtained. In the range of the air resistance described above, it is preferable that the moisture permeability of the polyolefin microporous film is high, and the higher the better. The moisture permeability of the polyolefin microporous film was measured by a method used in evaluation of moisture permeability of a moisture permeable film for a total heat exchange element or paper for a total heat exchange element in Examples described below.

In the present invention, a method of obtaining a polyolefin microporous film may be a known method, and is not particularly limited. An example of a specific manufacturing method is shown below.

First, a raw material which is obtained by, if necessary, adding an inorganic filler or an organic filler and various additives to a predetermined amount of a polyolefin-based resin and a plasticizer, is stirred and mixed by a mixer to obtain a raw material composition. Next, this mixture (the raw material composition) is charged into a twin screw extruder having a T-die attached to its tip, and is extruded into a sheet while being melted by heat and being kneaded to obtain a film-like material. Next, this film-like material is immersed in a suitable extraction solvent, the plasticizer is removed by extraction, and the film-like material is dried. Next, by stretching the dried film-like material in at least a uniaxial direction and molding it into a film having a predetermined thickness, it is possible to obtain a polyolefin microporous film in which a myriad of communication holes having complicated paths which are uniform, fine and complicatedly intricate throughout the film, are formed.

As the polyolefin-based resin, for example, a homopolymer, a copolymer or a mixed polymer of a polymer selected from the group comprising polyethylene, polypropylene, polybutylene and polymethylpentene, are mentioned. Among them, a homopolymer, a copolymer or a mixed polymer of a polymer selected from the group comprising polyethylene and polypropylene, is preferred.

Further, the polyolefin microporous film may be a film of 2 or more layers, and the polyolefin-based resin of each layer may be the same or different.

As the plasticizer, it is preferable to select a material which can be a plasticizer of a polyolefin-based resin, and various organic liquid-like materials which have compatibility with a polyolefin-based resin and can be easily extracted with various solvents and the like, can be used. Specifically, a mineral oil such as an industrial lubricant oil composed of saturated hydrocarbons (paraffin), a higher alcohol such as stearyl alcohol, an ester-based plasticizer such as dioctyl phthalate, and the like can be used. Among them, a mineral oil is preferred as a plasticizer in view of ease of reuse. The plasticizer is preferably blended at a ratio of 30mass% or more and 70mass% or less in the raw material composition.

As the solvent used for extracting and removing the plasticizer, a saturated hydrocarbon-based organic solvent such as hexane, heptane, octane, nonane, or decane can be used.

In addition, additives such as a surfactant (a hydrophilizing agent), an antioxidant, an ultraviolet absorber, a weathering agent, a lubricant, an antibacterial agent, antifungal agent, a pigment, a dye, a coloring agent, an antifogging agent and a matting agent may be added to the polyolefin microporous film, if necessary, within a range not impairing the object and the effect of the present invention.

<A method of measuring porosity and an average pore diameter>

The polyolefin microporous film was cut using an ion milling (manufactured by Hitachi High Technologies Co., Ltd., model number: IM4000PLUS) in a cooled-mode. The polyolefin microporous film was magnified and photographed (50000 times) using FE-SEM (JEOL Ltd., model number: JSM-6700F). The magnified and photographed image was printed, and original image paper was obtained by removing an unprinted part (a white part). An area of the magnified and photographed cross section of the original image paper obtained was calculate, and this area was set as $S_0$.

Then, the mass ($M_0$) of the original image paper was measured by an electronic balance (manufactured by AS ONE, model number: ITX-120). Each part corresponding to an open pore part of the original image paper was cut, and the cut paper was made to be open pore part image paper. Mass of all open pore part image paper was measured by the electronic balance, and the mass per each open pore part image paper was set as $M_1$. Based on that, porosity was determined by [Formula 1].

[Formula 1]

$$Porosity(\%) = \left(\frac{Summation\ of\ mass\ M_1\ of\ open\ pore\ part\ image\ paper}{M_0}\right) \times 100$$

In addition, an area per each open pore part ($S_1$) was calculated by [Formula 2].

[Formula 2]

$$S_1 = \left(\frac{M_1}{M_0}\right) \times S_0$$

A pore diameter of each open pore part ($R_1$) was calculated by [Formula 3]. Using the calculated $R_1$, an average pore diameter ($R_{ave}$) was determined by [Formula 4].

[Formula 3]

$$R_1 = 2\sqrt{\frac{S_1}{\pi}}$$

[Formula 4]

$$R_{ave} = \frac{Summation\ of\ R_1}{Number\ of\ open\ pore\ parts}$$

As above, in the present invention, the polyolefin microporous film is a microporous film comprised of a polyolefin-based resin and can be used without any particular limitation.

It is also possible to adjust thickness, air resistance, moisture permeability, porosity, average pore diameter and the like, of the polyolefin microporous film of the present invention. A method of controlling these physical properties is not particularly limited, and for example, a method of adjusting producing conditions such as an average molecular weight of the polyolefin-based resin, concentration of the polyolefin-based resin in a raw material composition, a mixing ratio of a solvent, a stretch ratio, a heat treatment temperature after stretching, and an immersion time in an extraction solvent, and the like, are mentioned.

Various types of polyolefin microporous films are already commercially available, and such commercially available products can be used in the present invention. As examples of the commercial products, SD220202 and SD216E (product name), which are manufactured by Shenzhen LingYan Technology Co., Ltd., SD21601+ (product name), which is manufactured by Shenzhen Senior Technology Material Co., Ltd., and the like, are mentioned.

A moisture permeable resin layer is formed on at least one surface of the polyolefin microporous film. Although the moisture permeable resin layer can be formed on both surfaces, it is preferable to form the moisture permeable resin layer on only one of the surfaces from a viewpoint of economy. As a method of applying the moisture permeable resin layer, a general application method can be used without any particular limitation as long as the method enables application on the polyolefin microporous film as uniformly as possible. A moisture permeable film for a total heat exchange element can be obtained by giving the moisture permeable resin layer on the polyolefin microporous film by a method such as coating (a bar coater, a gravure coater, a micro gravure coater, a blade coater, an air knife, or the like), impregnation (size press, or the like) or spraying, and by removing a solvent by a method such as drying.

Application amount (based on mass after drying) of the moisture permeable resin layer is not particularly limited. The application amount is preferably in the range of $0.1g/m^2$ or more and $5g/m^2$ or less and more preferably in the range of $0.5g/m^2$ or more and $2g/m^2$ or less. When the application amount is smaller than $0.1g/m^2$, there is a case in which sufficient gas barrier property is not obtained. When the application amount is larger than $5g/m^2$, there is a case in which sufficient moisture permeability is not obtained.

In the present invention, as a resin used in the moisture permeable resin layer, cellulose acetate, a urethane resin and the like, are mentioned.

In the present invention, it is preferable that cellulose acetate has degree of acetylation of 60% or less, and degree of polymerization of 165 to 185.

Cellulose acetate is a semisynthetic polymer obtained by acetate esterification (acetylation) of cellulose, which is a natural polymer. Cellulose is a polymer having anhydroglucose as a repeating unit and has three hydroxyl groups per repeating unit, and cellulose acetate having different properties is obtained depending on degree of esterification (acetylation). The degree of esterification can be expressed as a measure of degree of acetylation. Degree of acetylation of cellulose acetate used in the present invention is preferably 60% or less. When degree of acetylation of cellulose acetate is more than 60%, there is a case in which moisture permeability decreases. In addition, when degree of acetylation of cellulose acetate is more than 60%, there is a case in which solubility decreases, only a limited solvent can be used at the time of forming a cellulose acetate resin layer, therefore production of a moisture permeable film becomes difficult.

Degree of polymerization of cellulose acetate of the present invention is preferably 165 or more and 185 or less. When cellulose acetate having degree of polymerization outside this range is used, there is a case in which moisture permeability decreases. In addition, when cellulose acetate having degree of polymerization outside this range is used, there is a case in which solubility decreases, only a limited solvent can be used at the time of forming a cellulose acetate resin layer, therefore production of a moisture permeable film becomes difficult.

Various types of cellulose acetate are already commercially available, and such commercially available products can be used in the present invention. As examples of the commercial products, L40 and L50 (product name), which are manufactured by Daicel Co., Ltd., and the like, are mentioned.

Various types of urethane resins are already commercially available, and such commercially available products can be used in the present invention. The urethane resin is a generic term of a polymer having a urethane bond, and is usually a compound obtained by reacting a compound having an isocyanate group and a hydroxy group. The urethane resin used in the present invention is preferably one having excellent moisture permeability, and for example, SANPLENE (registered trademark) H-600 (product name), which is manufactured by Sanyo Chemical Industries, Ltd., and the like, are mentioned.

An interval plate used for a total heat exchange element of the present invention is not particularly limited. Paper, a film, a nonwoven fabric, a metal plate, and the like, can be used as the spacing plate. As the interval plate, a film is preferred from viewpoints of processability and moisture resistance. A main component constituting the film is not particularly limited, and polyester, polyamide, polyolefin, and the like, are preferably used from viewpoints of processability and cost. As the polyester, polyethylene terephthalate (PET), polytrimethylene terephthalate (PTT), polybutylene terephthalate (PBT), polylactic acid (PLA), and polyethylene naphthalate (PEN), and the like, are mentioned. Besides, as the polyester, liquid crystal polyester and the like are mentioned. Further, as the polyamide, nylon 6 (N6), nylon 66 (N66), nylon 11 (N11), nylon 12 (N12), and the like, are mentioned. As the polyolefin, polyethylene (PE), polypropylene (PP), and the like, are mentioned. Weight per unit area of a film used as such an interval plate is not particularly limited. The weight per unit area is preferably in the range of $50g/m^2$ or more and $100g/m^2$ or less. Thickness of such a film is preferably in the range of 5um or more and 100um or less.

The total heat exchange elements include a cross-flow type total heat exchange element and a counter-flow type total heat exchange element, and are produced by processing paper for total heat exchange or a moisture permeable film for a total heat exchange element, which is a partition plate. Both total heat exchange elements are produced using a dedicated machine, and both are constituted of a laminate in which air supplying layers which let supplying air flow pass through, and air exhausting layers which let exhausting air flow pass through are alternately laminated through a partition plate having moisture permeability. In each flow path, an interval plate for holding an interval of partition plates which are arranged at a predetermined interval, is formed. Generally, as the interval plate, a paper wave-shaped interval plate which is corrugated is used in the case of the cross-flow type total heat exchange element, and a resin frame produced by injection molding or the like is used in the case of the counter-flow type total heat exchange element. A direction in which the supplying air flow is guided by supplying air flow path and a direction in which the exhausting air flow is guided by exhausting air flow path are perpendicular to each other in the case of the cross-flow type total heat exchange element and are opposed to each other counter-flow type total heat exchange element.

An adhesive used when producing a total heat exchange element of the present invention is not particularly limited. As examples of the adhesives, polyvinyl alcohol-based adhesives, polyvinyl acetate-based adhesives, ether-based cellulose-based adhesives, acrylic resin-based adhesives, polyolefin-based adhesives, polyurethane-based adhesives, epoxy resin-based adhesives, styrene-butadiene rubber-based adhesives, and the like, are mentioned. Application amount (based on mass after drying) of the adhesive is not particularly limited. The application amount is preferably in the range of $0.5g/m^2$ or more and $4.0g/m^2$ or less. When amount to use (application amount) of the adhesive is small, there is a case in which adhesive strength is weak. When amount to use (application amount) of the adhesive is large, there is a case in which moisture permeability is impaired though adhesive strength can be secured. It is to be noted that an area of criteria of the interval plate in the application amount of the adhesive is the area of the interval plate used for production of the total heat exchange element before processed into a wave-shaped form.

In the present invention, a flame retardant, a fungicide, and the like may be added to the partition plate, the interval plate, and the adhesive, if necessary. Types of the flame retardant and the fungicide are not particularly limited.

EXAMPLES

Hereinafter, the present invention will be explained more specifically by showing Examples, but the present invention is not limited to the Examples.

It is to be noted that a film obtained in each Example and Comparative Example is referred to as "a moisture permeable film for a total heat exchange element", but "the moisture permeable film for a total heat exchange element" obtained in the Comparative Examples includes those having insufficient moisture permeability.

(Example 1)

Cellulose acetate having degree of acetylation of 55% and degree of polymerization of 180 (manufactured by Daicel Co., Ltd., product name: L50) was dissolved in methyl ethyl ketone (MEK) so as to be concentration of 5mass% to prepare application liquid. The application liquid was applied to one side of a commercial polypropylene microporous film (thickness: $16\mu m$, porosity: 47%, average pore diameter: 142nm, air resistance (Oken): 165sec, moisture permeability: $880g/m^2 \cdot 24hr$) using a micro gravure coater for an indicated amount and then dried. Thus, a moisture permeable film for a total heat exchange element (a partition plate) in which a cellulose acetate resin layer having application amount (based on mass after drying) of $0.5g/m^2$ is provided on one side, was obtained.

(Example 2)

A moisture permeable film for a total heat exchange element was obtained in the same manner as in Example 1, except that cellulose acetate having degree of acetylation of 55% and degree of polymerization of 170 (manufactured by Daicel Co., Ltd., product name: L40) was used as cellulose acetate.

(Example 3)

A moisture permeable film for a total heat exchange element was obtained in the same manner as in Example 1, except that a urethane resin manufactured by Sanyo Chemical Industries, Ltd. (product name: SANPLENE H-600) was used instead of cellulose acetate.

(Comparative Example 1)

A moisture permeable film for a total heat exchange element was obtained in the same manner as in Example 1, except that a commercial polyethylene microporous film (thickness: 9um, air resistance (Oken): 64sec, moisture permeability: 972g/m$^2$·24hr) was used as the microporous film.

(Comparative Example 2)

A moisture permeable film for a total heat exchange element was obtained in the same manner as in Example 1, except that KTF34 manufactured by Mitsubishi Chemical Corporation (thickness: 34um, air resistance (Oken): 1550sec, moisture permeability: 593g/m$^2$·24hr) was used as the microporous film.

(Comparative Example 3)

A moisture permeable film for a total heat exchange element was obtained in the same manner as in Example 1, except that YPBF37 manufactured by Yamatogawa Polymer Co., Ltd. (thickness: 37um, air resistance (Oken): 2231sec, moisture permeability: 512g/m$^2$·24hr) was used as the microporous film.

(Comparative Example 4)

A moisture permeable film for a total heat exchange element was obtained in the same manner as in Example 1, except that a methacrylate ester-based polymer resin manufactured by Negami Chemical Industrial Co., Ltd. (a non-moisture permeable resin, product name: HI-PEAL (registered trademark) MA4620) was used instead of cellulose acetate.

(Comparative Example 5)

A moisture permeable film for a total heat exchange element was obtained in the same manner as in Example 1, except that a polyamide resin manufactured by T & KTOKA Co., Ltd. (a non-moisture permeable resin, product name: TOHMIDE (registered trademark) 1320) was used instead of cellulose acetate.

(Example 4)

A moisture permeable film for a total heat exchange element was obtained in the same manner as in Example 1, except that cellulose acetate having degree of acetylation of 61% and degree of polymerization of 270 (manufactured by Daicel Co., Ltd., product name: LT35) was used as cellulose acetate and the cellulose acetate was dissolved in methylene chloride.

(Example 5)

A moisture permeable film for a total heat exchange element was obtained in the same manner as in Example 1, except that cellulose acetate having degree of acetylation of 55% and degree of polymerization of 160 (manufactured by Daicel Co., Ltd., product name: L30) was used as cellulose acetate and the cellulose acetate was dissolved in acetone.

(Example 6)

A moisture permeable film for a total heat exchange element was obtained in the same manner as in Example 1, except that cellulose acetate having degree of acetylation of 55% and degree of polymerization of 150 (manufactured by Daicel Co., Ltd., product name: L20) was used as cellulose acetate and the cellulose acetate was dissolved in acetone.

(Example 7)

A moisture permeable film for a total heat exchange element was obtained in the same manner as in Example 1, except that cellulose acetate having degree of acetylation of 55% and degree of polymerization of 190 (manufactured by Daicel Co., Ltd., product name: L70) was used as cellulose acetate.

(Comparative Example 6)

Paper for a total heat exchange element was obtained by impregnating base paper (weight per unit area: 30g/m$^2$, thickness: 40um, air resistance (Oken): 2770000sec) with 4.8g/m2 lithium chloride using a nip coater under the condition that a rate was 60m/min and a nip pressure was 343kPa.

Evaluation was performed by the following method on moisture permeable film for a total heat exchange element, or paper for a total heat exchange element, of Examples 1 to 7 and Comparison Examples 1 to 6. Evaluation results were shown in Table 1.

[Moisture permeability: evaluation method of moisture permeability]

Moisture permeability was measured according to JIS Z 0208:1976, "a test method of moisture permeability of moisture proof packaging materials (Cup method)". It is to be noted that temperature and humidity conditions were set to 23°C and 50% as relative humidity, 10g of calcium chloride was used, and measuring time was changed to 1 hour. Mass change obtained by measurement under such conditions was converted to mass change in 24hour.

The evaluation criteria are as follows.

◎: Moisture permeability was 850g/m$^2$·24hr or more. Very good.
○: Moisture permeability was 800g/m$^2$·24hr or more but less than 850g/m$^2$·24hr. Good.
△: Moisture permeability was 750g/m$^2$·24hr or more but less than 800g/m$^2$·24hr. Within the acceptable range.
✕: Moisture permeability was less than 750g/m$^2$·24hr. Out of the acceptable range.

[Gas barrier property: evaluation method of air resistance (Oken)]

Air resistance (Oken) was measured according to JIS P 8117:2009. The evaluation criteria are as follows.

◎: Air resistance (Oken) was $1.0\times10^6$ sec or more. Very good.
○: Air resistance (Oken) was $1.0\times10^5$ sec or more but less than $1.0\times10^6$ sec. Good.
△: Air resistance (Oken) was $1.0\times10^4$ sec or more but less than $1.0\times10^5$ sec. Within the acceptable range.
✕: Air resistance (Oken) was less than $1.0\times10^4$ sec. Out of the acceptable range.

[Moisture resistance: evaluation method of moisture resistance]

Total heat exchange elements with longitudinal 200mm, transverse 200mm and height 250mm, and height 3mm per one stage were produced using the moisture permeable film for a total heat exchange element and the paper for a total heat exchange element. On this occasion, 60g/m$^2$ polypropylene films were used as interval plates. Polyvinyl acetate-based adhesives were used as adhesives.

The total heat exchange elements were left for 72 hours under conditions of 40°C and 95% as relative humidity, and presence or absence of water dripping and change of shape of the total heat exchange elements were visually evaluated. The evaluation criteria are as follows.

◎: There was no water dripping and change of shape. Very good.
O: There was little water dripping and change of shape. Good.
△: There was some water dripping and change of shape. Within the acceptable range.
✕: There was water dripping and change of shape. Out of the acceptable range.

[Adhesiveness: evaluation method of adhesiveness]

An adhesive surface of a cellophane tape was pressed on a surface of moisture permeable film for a total heat exchange element on which a resin layer was applicated, and degree of peeling of the resin layer was evaluated. Regardless of whether or not dispersibility of application liquid was good, after coating and drying, a cellophane tape having a width of 1.8cm and a length of 5cm was lightly adhered to the moisture permeable film for a total heat exchange element and was gently removed. The adhesive surface of the cellophane tape was used as an observation surface, and the adhesiveness was evaluated visually as follows.

◎: No deposits are observed on the adhesive surface of the cellophane tape. Very good.

○: Some deposits are observed on the adhesive surface of the cellophane tape. Good.

△: The resin layer was observed on a part of the adhesive surface of the cellophane tape. Within the acceptable range.

×: The resin layer was observed on a whole of the adhesive surface of the cellophane tape. Out of the acceptable range.

[Table 1]

| | polyolefin microporous film | | resin layer | | | | adhesiveness | moisture permeability | | air resistance | | moisture resistance |
|---|---|---|---|---|---|---|---|---|---|---|---|---|
| | air resistance sec | moisture permeability g/m²·24hr | type | | degree of acetylation % | degree of polymerization | | g/m²·24hr | evaluation | sec | evaluation | |
| Example 1 | 165 | 880 | cellulose acetate | moisture permeable | 55 | 180 | Δ | 865 | ◎ | 4,909,400 | ◎ | ◎ |
| Example 2 | 165 | 880 | cellulose acetate | moisture permeable | 55 | 170 | Δ | 802 | ○ | 5,437,900 | ◎ | ◎ |
| Example 3 | 165 | 880 | urethane resin | moisture permeable | | | ◎ | 852 | ◎ | 128,600 | ○ | ◎ |
| Example 4 | 165 | 880 | cellulose acetate | moisture permeable | 61 | 270 | Δ | 756 | Δ | 3,801,500 | ◎ | ◎ |
| Example 5 | 165 | 880 | cellulose acetate | moisture permeable | 55 | 160 | Δ | 798 | Δ | 4,466,300 | ◎ | ◎ |
| Example 6 | 165 | 880 | cellulose acetate | moisture permeable | 55 | 150 | Δ | 772 | Δ | 4,744,100 | ◎ | ◎ |
| Example 7 | 165 | 880 | cellulose acetate | moisture permeable | 55 | 190 | Δ | 793 | Δ | 3,523,500 | ◎ | ◎ |
| Comparative Example 1 | 64 | 972 | cellulose acetate | moisture permeable | 55 | 180 | × | 854 | OO | 16,500 | Δ | ◎ |
| Comparative Example 2 | 1550 | 593 | cellulose acetate | moisture permeable | 55 | 180 | ○ | 506 | × | 2,649,100 | ◎ | ◎ |
| Comparative Example 3 | 2231 | 512 | cellulose acetate | moisture permeable | 55 | 180 | ○ | 429 | × | 3,156,700 | ◎ | ◎ |
| Comparative Example 4 | 165 | 880 | methacrylate ester-based polymer resin | non-moisture permeable | - | - | ◎ | 728 | × | 3,352,100 | ◎ | ◎ |
| Comparative Example 5 | 165 | 880 | polyamide resin | non-moisture permeable | - | - | ◎ | 467 | × | 3,600 | × | ◎ |

EP 4 302 989 A1

(continued)

| | polyolefin microporous film | | resin layer | | | | adhesiveness | moisture permeability | | air resistance | | moisture re-sistance |
|---|---|---|---|---|---|---|---|---|---|---|---|---|
| | air resist-ance sec | moisture per-meability g/m$^2$·24hr | type | | degree of acetylation % | degree of po-lymerization | | g/m$^2$·24hr | evaluation | sec | evaluation | |
| Comparative Example 6 | | | - | - | - | - | - | 888 | ◎ | 3,091,200 | ◎ | × |

12

Comparing Example 1 and Comparison Examples 1 to 3 shows that a moisture permeable film for a total heat exchange element using a polyolefin microporous film having air resistance of 100sec or more and moisture permeability of 750g/m$^2$·24hr or more, is a moisture permeable film for a total heat exchange element with good adhesiveness to a polyolefin microporous film and having high moisture permeability, gas barrier property and moisture resistance. Comparing Examples 1 to 7 and Comparison Examples 4 and 5 shows that a moisture permeable film for a total heat exchange element, containing a polyolefin microporous film and a moisture permeable resin layer (more preferably, a cellulose acetate resin layer having degree of acetylation of 60% or less, and degree of polymerization of 165 or more and 185 or less, and a urethane resin layer) provided on at least one surface of the polyolefin microporous film, is a moisture permeable film for a total heat exchange element having high moisture permeability, gas barrier property and moisture resistance. A moisture permeable film cellulose acetate having degree of acetylation of 61% in Example 4 was not problematic in terms of performance, but some loads was required in a producing process since the cellulose acetate could not dissolved in MEK and dissolved in methylene chloride. Comparing Examples 1 to 7 and Comparison Examples 6 shows that a moisture permeable film for a total heat exchange element of the present invention is good in moisture resistance, compared with paper for a total heat exchange element made of paper.

INDUSTRIAL APPLICABILITY

A moisture permeable film for a total heat exchange element of the present invention is used in a total heat exchange element of a total heat exchanger which performs exchange of humidity (latent heat) together with exchange of temperature (sensible heat) when exhausting foul indoor air together with supplying fresh outside air.

**Claims**

1. A moisture permeable film for a total heat exchange element, containing a polyolefin microporous film having air resistance of 100sec or more and moisture permeability of 750g/m$^2$·24hr or more, and a moisture permeable resin layer provided on at least one surface of the polyolefin microporous film.

2. The moisture permeable film for a total heat exchange element according to Claim 1, wherein the moisture permeable resin layer contains a cellulose acetate resin having degree of acetylation of 60% or less, and degree of polymerization of 165 or more and 185 or less.

3. The moisture permeable film for a total heat exchange element according to Claim 1, wherein the moisture permeable resin layer contains a urethane resin.

4. A total heat exchange element containing the moisture permeable film for a total heat exchange element according to any of Claims 1 to 3.

## INTERNATIONAL SEARCH REPORT

International application No.

**PCT/JP2022/008116**

### A. CLASSIFICATION OF SUBJECT MATTER

***B32B 5/24***(2006.01)i; ***F28F 3/08***(2006.01)i; ***F28F 21/06***(2006.01)i; ***C08J 9/28***(2006.01)i; ***C08J 9/36***(2006.01)i; ***C08J 7/04***(2020.01)i; ***F24F 7/08***(2006.01)i
FI: F28F3/08 301B; B32B5/24 101; C08J7/04 Z; C08J9/28; C08J9/36 CES; F24F7/08 101A; F28F21/06

According to International Patent Classification (IPC) or to both national classification and IPC

### B. FIELDS SEARCHED

Minimum documentation searched (classification system followed by classification symbols)

F28F3/00-3/14; F28F21/06; C08J9/28; C08J9/36; C08J7/04; B32B5/24; F24F7/08; F24F3/147

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-20779 A (TORAY INDUSTRIES, LTD.) 26 January 2017 (2017-01-26) paragraphs [0001]-[0221], fig. 1 | 1, 3-4 |
| Y | | 2 |
| X | JP 2007-95350 A (ASAHI KASEI CHEMICALS CORP.) 12 April 2007 (2007-04-12) paragraphs [0001]-[0042] | 1, 3-4 |
| Y | | 2 |
| Y | JP 6-157602 A (DAICEL CHEMICAL INDUSTRIES, LTD.) 07 June 1994 (1994-06-07) in particular, paragraphs [0044]-[0084] | 2 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **26 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/008116**

| Patent document cited in search report | | | Publication date (day/month/year) | Patent family member(s) | | | Publication date (day/month/year) |
|---|---|---|---|---|---|---|---|
| JP | 2017-20779 | A | 26 January 2017 | (Family: none) | | | |
| JP | 2007-95350 | A | 12 April 2007 | (Family: none) | | | |
| JP | 6-157602 | A | 07 June 1994 | US | 5977346 | A | |
| | | | | in particular, column 20, line 9 to column 25, line 26 | | | |
| | | | | EP | 590401 | A2 | |
| | | | | DE | 69327286 | T2 | |
| | | | | CN | 1087645 | A | |
| | | | | CN | 1148599 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018090821 A
- JP 2014066474 A
- JP 2014061505 A
- WO 2012056506 A